# EUROPEAN PATENT APPLICATION

(11) **EP 1 962 531 A2**
(43) Date of publication of application: **27.08.2008**
(21) Application number: 08151844.1
(22) Date of filing: 22.02.2008
(51) Int. Cl.: H04Q 7/30

(54) **Cellular mobile radio communication system**

(30) Priority: 22.02.2007 JP 2007042800; 29.01.2008 JP 2008017322
(71) Applicant: Fujitsu Ltd., Kawasaki-shi, Kanagawa 211-8588 (JP)
(72) Inventor: Katori, Masato c/o FUJITSU LIMITED, Kawasaki-shi, Kanagawa 211-8588 (JP); Ueno, Makoto c/o FUJITSU LIMITED, Kawasaki-shi, Kanagawa 211-8588 (JP)
(74) Representative: Fenlon, Christine Lesley

(57) **Abstract**

A method of autonomously generating neighboring cell information in a cellular mobile radio communication system including: transmitting, by a first base station, a measurement radio signal through a radio channel for radio field intensity measurement; measuring a radio field intensity of the measurement radio signal received from the first base station; determining based on the measured radio field intensity whether the first base station is a neighboring cell; registering identification information of the first base station in second office data of neighboring cells possessed by itself when the first base station is determined as the neighboring cell; obtaining first office data possessed by the first base station based on the identification information; and reflecting the first office data obtained from the first base station as neighboring cell information in the second office data possessed by itself, the measuring, determining, registering, obtaining and reflecting being sequentially performed by each of second base stations.

## Description

### BACKGROUND OF THE INVENTION

The present invention relates to a cellular mobile radio communication system, in particular, a method of autonomously generating neighboring cell information in the cellular mobile radio communication system.

Conventionally, in a cellular mobile radio communication system, office data held in each base station is generated by a system operation company (maintenance person) for each base station, and therefore, the generation of the office data is extremely laborious.

Neighboring cell information of the office data defines neighboring cells for each base station and is used to determine a destination cell candidate to which a mobile terminal belonging to the base station is next handed over. A neighboring cell is required to be adjacent to a cell not only geographically but also in view of a radio wave environment to be a diversity environment.

In consideration of the need of handover, the neighboring cell information as the office data is indispensable for the base station in the mobile radio communication system, which supports the mobility of the mobile terminal. The neighboring cell information includes specific information for each base station such as a base station ID (identification information), latitude/longitude information, and base station capacity information (for example, whether or not an HSDPA (High Speed Downlink Packet Access) function is provided).

It is apparent that the office data should be generated for each base station at the time of system construction. Even when a new base station is installed at a location included in an already serviced area, not only the office data of the added base station but also the office data of the neighboring base stations for the new base station have to be corrected.

Furthermore, in an urban area, when the radio wave environment is changed by the construction or the demolition of a building around the base station, the office data is also required to be modified.

Therefore, a technique of autonomously generating or updating the office data for the neighboring cell information upon an external trigger is demanded.

The following are related arts to the present invention.
[Patent document 1] Japanese Patent Application Laid-Open No. 2005-27189
[Patent document 2] Japanese Patent Application Laid-Open No. Hei 10-191442
[Patent document 3] Japanese Patent Application Laid-Open No. Hei 9-23474

### SUMMARY OF THE INVENTION

It is desirable to provide a technique that enables a base station to autonomously generate office data for neighboring cell information of each base station without using a human operation as much as possible.

It is also desirable to provide a technique which enables the base station to autonomously generate and manage the office data for the neighboring cell information provided for each base station instead of the generation of the office data for each base station by a maintenance operation of a system operation company at the time of system deployment or installation of a new base station.

It is desirable to provide a technique that enables the base station to autonomouslymodify the office data according to a change in a radio wave environment instead of the modification of the office data by the maintenance operation of the system operation company when the radio wave environment around the base station is changed.

There may be provided a method of autonomously generating neighboring cell information in a cellular mobile radio communication system including a plurality of base station devices, each constituting a cell covering a service area for providing a mobile terminal with a mobile communication service, and at least one radio network controller managing the plurality of base station devices, including:
transmitting, by a first base station device of the plurality of base station devices, a measurement radio signal through a radio channel for radio field intensity measurement;
measuring a radio field intensity of the measurement radio signal received from the first base station device;
determining based on the measured radio field intensity whether or not the first base station device is a neighboring cell;
registering identification information of the first base station device in second office data of neighboring cells possessed by itself when the first base station device is determined as the neighboring cell;
obtaining first office data possessed by the first base station device based on the identification information; and
reflecting the first office data obtained from the first base station device as neighboring cell information in the second office data possessed by itself, wherein the measuring, determining, registering, obtaining and reflecting being sequentially performed by each of a plurality of the other second base station devices.

In the above configuration, the radio channel for the radio field intensity measurement is predetermined according to a radio transmission method. Each of the second base station devices recognizes the first base station device based on the identification information contained in the measurement radio signal.

Moreover, each of the second base station devices deletes the neighboring cell information corresponding to the first base station device from the second office data when the first base station device is determined as not being the neighboring cell and the first base station device has been registered as the neighboring cell in the second office data currently possessed by itself.

Further, the radio network controller instructs the first base station device to transmit the measurement radio signal. The radio network controller instructs the first base station device to transmit the measurement radio signal upon restart of one of the second base station devices. The radio network controller periodically repeats an instruction of transmitting the measurement radio signal to the first base station device to allow the neighboring cell information to be dynamically updated.

According to the disclosed method, an operation company of the cellular mobile radio communication system can easily design a complicated system in consideration of the repetition of a frequency or a frequency band.

Moreover, according to the disclosed method, when a new base station is installed, the office data of the added base station is not required to be generated individually. In addition, the office data of the neighboring base stations affected by the installation of the new base station is not required to be updated.

Furthermore, according to the disclosed method, even when the radio wave environment is changed by the construction or the demolition of a building around the base station, the base station can autonomously and dynamically update the office data.

Other: characteristics and advantages will become further apparent by reading the following description of the specification with reference to the accompanying drawings and the Claims.

### BRIEF DESCRIPTION OF THE DRAWINGS

FIG. 1A is a block diagram for illustrating a configuration of a system and a first exemplary operation in a system according to one embodiment;
FIG. 1B is a sequence chart for illustrating the first exemplary operation in the system according to the embodiment;
FIG. 1C is a diagram for illustrating an adjacency relationship of a plurality of base stations in the system according to the embodiment;
FIG. 2A is a diagram for illustrating a method of assigning a radio channel for radio field intensity measurement in the system according to the embodiment;
FIG. 2B is a diagram for illustrating a method of assigning the radio channel for radio field intensity measurement in the system according to the embodiment;
FIG. 2C is a diagram for illustrating a method of assigning the radio channel for radio field intensity measurement in the system according to the embodiment;
FIG. 3A is a block diagram for illustrating a system configuration and a second exemplary operation according to the embodiment;
FIG. 3B is a sequence chart for illustrating a second exemplary operation in the system according to the embodiment;
FIG. 3C is a block diagram for illustrating a system configuration and a variation of the second exemplary operation according to the embodiment;
FIG. 3D is a sequence chart for illustrating a variation of the second exemplary operation in the system according to the embodiment;
FIG. 4 is a sequence chart for illustrating a third exemplary operation in the system according to the embodiment;
FIG. 5 is a sequence chart for illustrating a fourth exemplary operation in the system according to the embodiment;
FIG. 6A is a block diagram for illustrating a system configuration and a fifth exemplary operation according to the embodiment;
FIG. 6B is a sequence chart for illustrating the fifth exemplary operation in the system according to the embodiment;
FIG. 6C is a sequence chart for illustrating the fifth exemplary operation in the system according to the embodiment;
FIG. 7A is a diagram for illustrating a sixth exemplary operation in the system according to the embodiment;
FIG. 7B is a diagram for illustrating the sixth exemplary operation in the system according to the embodiment;
FIG. 7C is a diagram for illustrating the sixth exemplary operation in the system according to the embodiment;
FIG. 8 is a diagram for illustrating a seventh exemplary operation in the system according to the embodiment;
FIG. 9A is a block diagram for illustrating a system configuration and a ninth exemplary operation according to another embodiment;
FIG. 9B is a sequence chart for illustrating the ninth exemplary operation in the system according to another embodiment;
FIG. 9C is a sequence chart for illustrating the ninth exemplary operation in the system according to another embodiment;
FIG. 9D is a block diagram for illustrating the ninth exemplary operation in the system according to another embodiment;
FIG. 10A is a block diagram for illustrating a system configuration and a tenth exemplary operation according to a further embodiment;
FIG. 10B is a sequence chart for illustrating the tenth exemplary operation in the system according to the further embodiment;
FIG. 10C is a sequence chart for illustrating the tenth exemplary operation in the system according to the further embodiment;
FIG. 10D is a sequence chart for illustrating the tenth exemplary operation in the system according to the further embodiment;
FIG. 10E is a sequence chart for illustrating the tenth exemplary operation in the system according to the further embodiment; and
Fig. 11 is a block diagram for illustrating a variation of the system configuration and an eleventh exemplary operation according to the further embodiment.

### DETAILED DESCRIPTION OF THE PREFERRED EMBODIMENTS

Hereinafter, the present invention will be described further in detail, referring to the accompanying drawings. The drawings illustrate preferred embodiments. However, the present invention can be carried out in various different modes, and should not be read as being limited to the embodiments described in this specification. Rather, these embodiments are provided so that the disclosure of this specification will be thorough and complete and will fully convey the scope of the present invention to those skilled in the art.

### [Exemplary system configuration]

A cellular mobile radio communication system in one embodiment includes a plurality of base stations (in a strict sense, base station devices) and a plurality of radio network controllers.

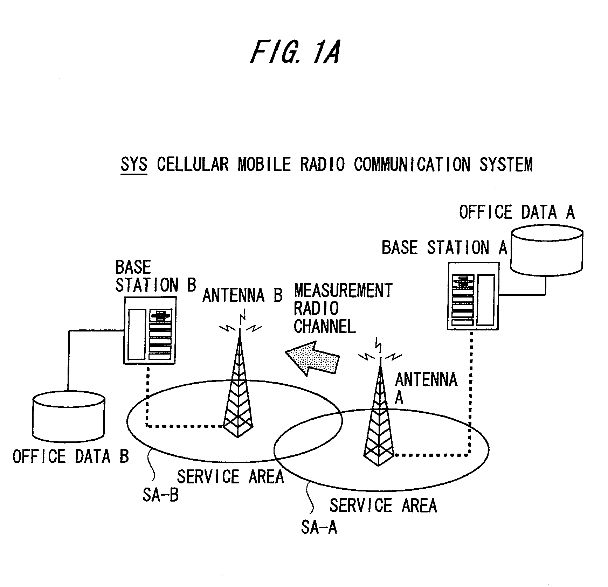

Referring to Fig. 1A illustrating an example of a system configuration, a cellular mobile radio communication system SYS includes a plurality of base stations A and B adjacent to each other and antennas A and B respectively connected to the base stations A and B. For convenience of the description, the illustration of the radio network controllers is herein omitted. Although a single radio network controller controls multiple (several tens of) base stations in practice, only two base stations are illustrated herein. Office data A and B respectively corresponding to the base stations A and B are stored in storage devices respectively included in the base stations A and B. Each office data is data of neighboring cell information of each of the base stations.

The base station A and the antenna A constitute a cell for a first area (service area) SA-A for providing a mobile terminal with a mobile communication service. The base station B and the antenna B constitute a cell for a second area (service area) SA-B for providing the mobile terminal with the mobile communication service.

In the cellular mobile radio communication system SYS, each of the base stations and the radio network controllers has the following functions to autonomously generate the office data for the neighboring cell information of each of the base stations without using a human operation as much as possible.
(1) The function of causing the base stations to mutually measure a radio field intensity to determine whether or not the base stations constitute the neighboring cells adjacent to or close to each other.
(2) The function of managing the neighboring cell information based on the result of determination that the base stations constitute the neighboring cells.
(3) The function of generating the neighboring cell information after the restart of the base station.
(4) The function of periodically executing a process of generating the neighboring cell information to dynamically update the neighboring cell information.
(5) The function of activating the process of generating the neighboring cell information according to an operation by a maintenance person.
(6) The function of causing the radio network controller to generate timing to notify the base station under the control of the radio network controller of the generated timing for the communication between the base stations.
(7) The function of allowing the maintenance person to customize the neighboring cell information and protecting the customization.
(8) The function of using geographic information of a GPS (Global Positioning System) to generate auxiliary data for generating the neighboring cell information.
(9) The function of using the geographic information of the GPS to exclude the base station that is not geographically the neighboring cell from neighboring cell candidates.

### [Exemplary system operations]

Next, various exemplary operations in the cellular mobile radio communication system SYS according to one embodiment will be described. Each of the processes described below can be executed in combination of a plurality of arbitrary ones or all of the processes selected therefrom.

### [First exemplary operation]

In the cellular mobile radio communication system SYS, the base stations mutually measure the radio field intensity to determine based on the measured radio field intensity that the base stations constitute the neighboring cells.

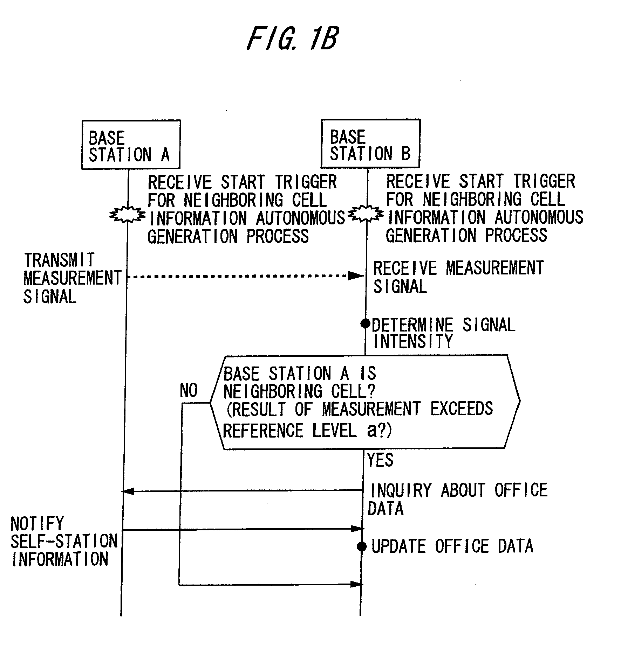

Figs. 1A and 1B are views for illustrating a state where the base stations A and B communicate with each other to measure the radio wave. The base stations A and B are base stations constructed to be geographically adjacent to each other. Each of the base stations A and B starts operating upon reception of an operation timing (start trigger) of autonomous generation of the neighboring cell information.

The base station A uses a measurement radio channel to transmit a radio wave (measurement radio signal). The base station B receives the measurement radio wave from the base station Ato measure the radio field intensity. When the measured radio field intensity exceeds a reference level (threshold value) a, the base station B determines that the base station A constitutes the neighboring cell for the base station B. On the other hand, when the radio field intensity is equal to or lower than the reference level "a", the base station B determines that the cell constituted by the base station A is not the neighboring cell. The base station B also reads a base station ID (identification information) contained in the measurement radio wave to recognize the base station A.

When the base station B certificates the base station A as the neighboring cell as a result of the determination, the base station B registers the base station ID of the base station A in a list of the neighboring cells managed by the base station B (office data B). Thereafter, the base station B transmits a message for requesting office data A of the base station A, based on the base station ID, to the base station A via a backbone (wired network connection).

The base station A, which has received the request, returns its own station information obtained from the office data A to the base station B. The base station B reflects the information obtained from the base station A in the office data B managed by the base station B as the neighboring cell information. Otherwise, if the base station A is determined as not being the neighboring cell and the base station A is registered as the neighboring cell in the office data B currently held by the base station B, the neighboring cell information of the base station A is deleted from the office data B. The reference level "a" of the radio field intensity, which serves as a reference of the determination of the neighboring cell, is managed as a system parameter.

The radio channel used for measuring the radio field intensity is shared by the base stations A and B. Therefore, if the multiple base stations A and B simultaneously output the radio waves, the radio field intensity cannot be measured. For this reason, timing control is required between the base stations A and B.

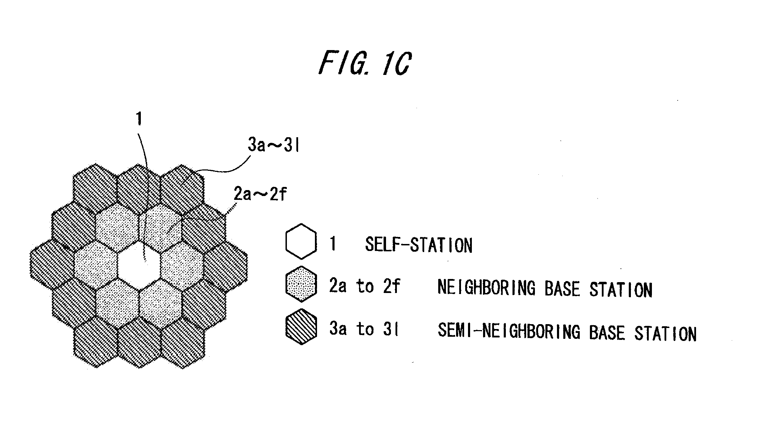

Referring to Fig. 1C, for some configurations of the cellular mobile radio communication system SYS, office data of neighboring base stations 2a to 2f directly adjacent to a self-station 1 and office data of semi-neighboring base stations 3a to 31 which are adjacent to the neighboring base stations 2a to 2f but not to the self-station 1 are both required.

For semi-neighboring base station information, a list of the semi-neighboring base stations corresponding to neighboring base stations for the neighboring base stations is referred to based on the neighboring base station information acquired by the collection of the neighboring cell information described above. It is assumed that the office data contains list information of the neighboring base stations for the station. Thereafter, based on the information of the list of the semi-neighboring base stations, an inquiry about the office data is made to the semi-neighboring base station. Then, the base station is notified of the office data of the semi-neighboring base station to add the semi-neighboringbase station information to its own office data to update the office data.

Next, a method of assigning a radio channel for the communication between the base stations to measure the radio field intensity in the cellularmobile radio communication system SYS will be described.

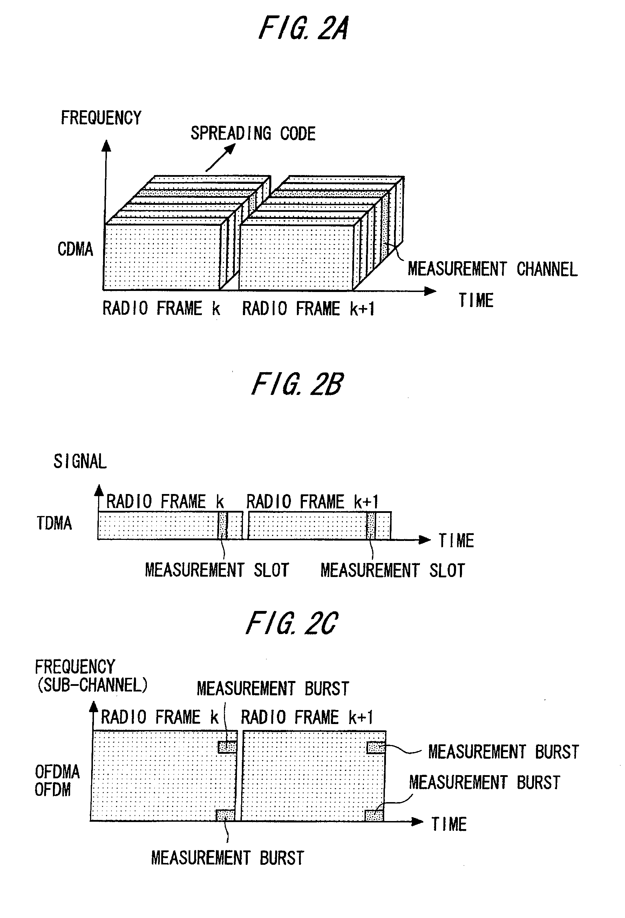

The wireless channel for measuring the radio field intensity between the base stations is predetermined to be assigned. A method of assigning the wireless channel for measuring the radio field intensity is different according to a wireless transmission system of the mobile radio communication system SYS.
(1) In the case of WCDMA (see Fig. 2A)
   When the cellular mobile radio communication system SYS uses a WCDMA (Wideband Code Division Multiple Access) as a radio transmission method, a signal obtained by coding a NULL signal using the base station ID into a CDMA spreading code is assigned to the radio channel for measuring the radio field intensity (measurement channel). Then, each radio frame is transmitted. The counterpart base station, which receives the radio frame, can obtain the base station ID of the transmission source based on the spreading code.
(2) In the case of TDMA (see Fig. 2B)
   When the cellular mobile radio communication system SYS uses a TDMA (Time Division Multiple Access) as a radio transmission method, a specific time slot is reserved for the measurement channel. The time slot lies in a time zone common to all the base stations. Therefore, according to the order control, any of the base stations emits (transmits) the measurement radio wave for each radio frame. The measurement radio wave contains the base station ID of the transmission source as a transmission signal. As the time slot, a length sufficient for the measurement is assigned. A specific different frequency is assigned to each cell.
(3) In the case of OFDMA/OFDM (see Fig. 2C)
   When the cellular mobile radio communication system SYS uses an OFDMA (Orthogonal Frequency Division Multiple Access)/OFDM (Orthogonal Frequency Division Multiplexing) as a radio transmission method, a fixed burst consisting of a specific sub-channel and a specific time slot is assigned as the measurement radio channel. The burst area is the same area for all the base stations. Therefore, according to the timing control, any of the base stations emits the measurement radio wave. The measurement radio wave contains the base station ID of the transmission source as the transmission signal. The size of the burst is determined to be sufficiently large for the measurement. Since a frequency band in the OFDMA/OFDM method is wide, physical carriers are discretely located to absorb a difference in the radio wave environment caused by a different frequency of high and low.

Since it is not efficient to use a precious radio resource solely for the measurement in any of the radio transmission methods described above, a zone to be used may be shared by a signal channel for other applications (C-Plane/U-Plane) to be used only for a specific time period by time management or mode management. Each of the base stations brings the measurement radio channels into a reception state to be able to receive the measurement signal from another base station except for its own transmission timing of the measurement radio wave. On the other hand, at its own transmission timing, the base station brings the measurement radio channel into a transmission state to transmit the measurement radio wave.

### [Second exemplary operation]

In the cellular mobile radio communication system SYS, the radio network controller makes a notification of the timing of allowing the base stations to mutually measure the radio field intensity by the following method.

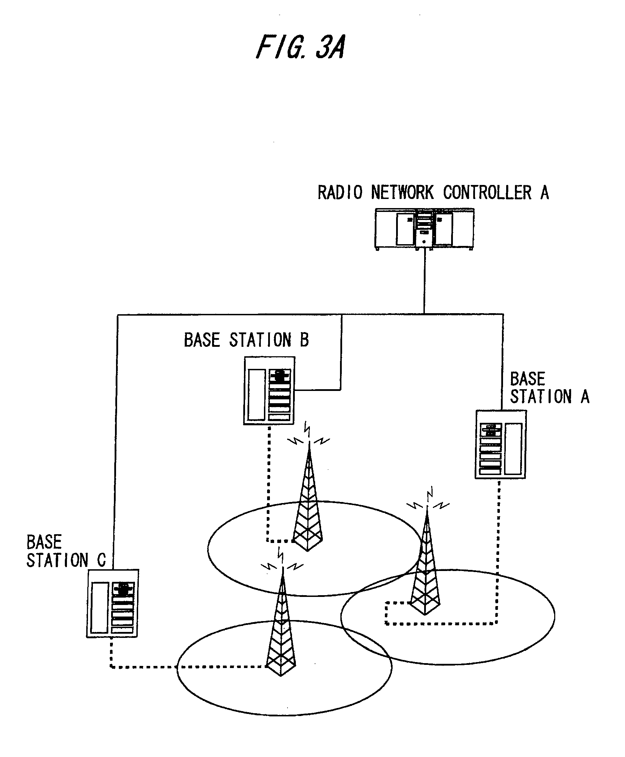

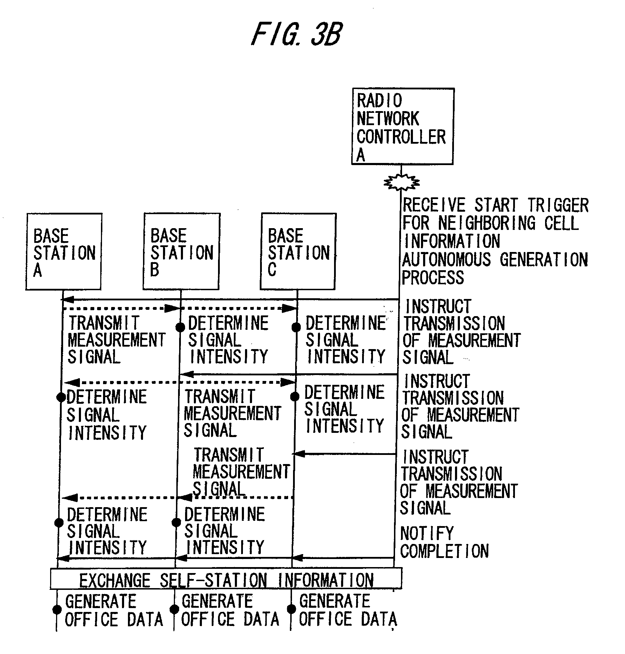

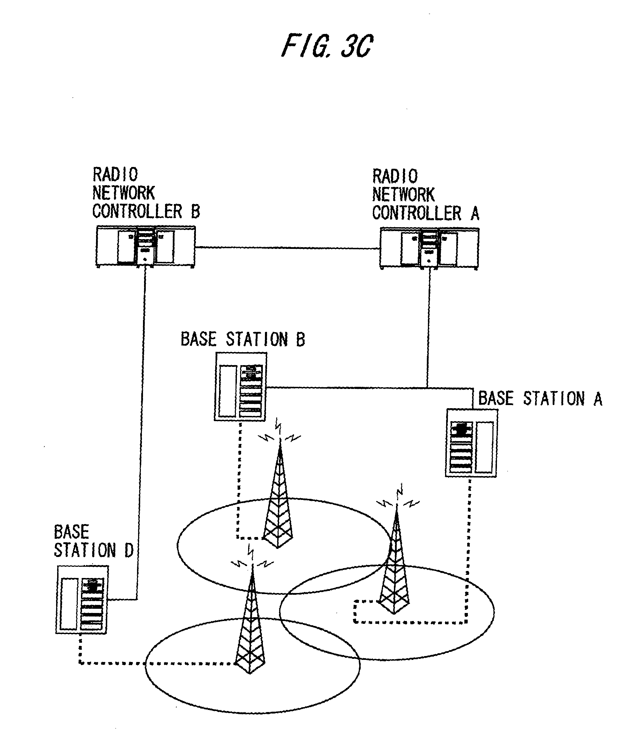

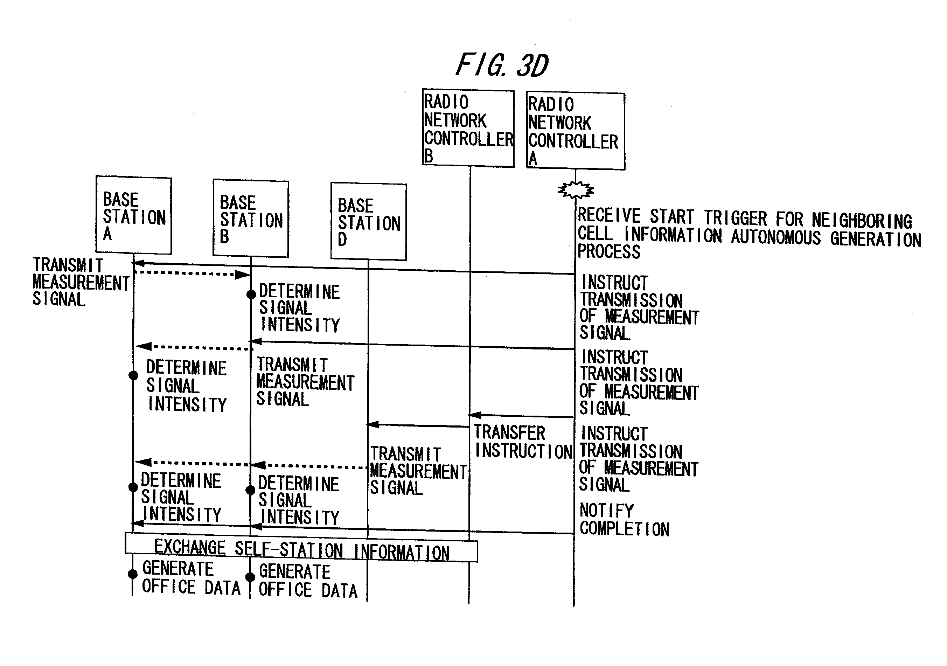

Fig. 3A illustrates a configuration of the cellular mobile radio communication system SYS in the second exemplary operation. Fig. 3B illustrates a sequence of message exchange in the system configuration illustrated in Fig. 3A. Fig. 3C illustrates a configuration of the cellular mobile radio communication system SYS in a variation of the second exemplary operation. Fig. 3D illustrates a sequence of message exchange in the system configuration illustrated in Fig. 3C.

In the cellular mobile radio communication system SYS illustrated in Fig. 3A, the single radio network controller A manages three base stations A, B and C under its control. Although the single radio network controller controls multiple (several tens of) base stations in practice, only three base stations are illustrated herein for convenience of the description.

In Figs. 3A and 3B, the radio network controller A, which has received the start trigger for the process of autonomously generating the neighboring cell information, sequentially instructs the base stations A, B and C under its control to emit the measurement radio wave. The base station, which has received the instruction, transmits the measurement radio wave (measurement radio signal) through the pre-assigned radio channel for radio field intensity measurement. If the use of the radio channel reserved for the measurement is determined by the timing such as a time, the emission is performed at the next designated timing.

While the base station A is transmitting the measurement radio signal through the measurement radio channel, the other base stations B and C receive the radio wave from the base station A and measure the received radio wave. Thereafter, each of the base stations B and C determines based on the radio field intensity whether or not the base station A is the neighboring cell. In the same manner, the base stations B and C sequentially transmit the measurement radio signal.

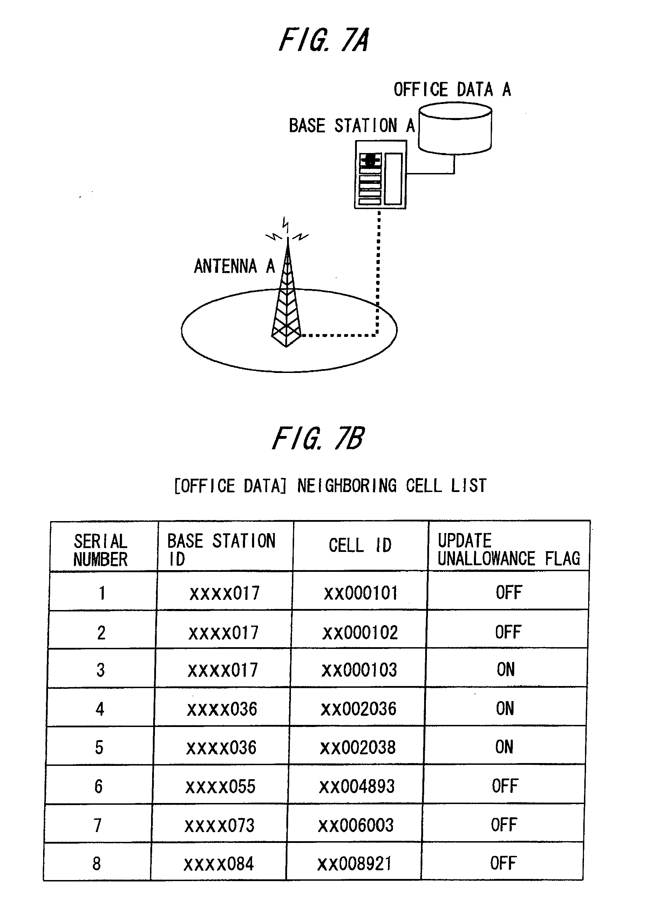

Upon completion of the measurement radio signal transmission instruction to all the base stations A, B and C under its control, the radio network controller A notifies all the base stations A, B and C under its control of the completion of the transmission. Each of the base stations A, B and C, which has received the notification of completion, updates a neighboring cell list (described in detail below referring to Fig. 7B) in the office data based on the result of determination to collect the office data from the neighboring base station via the backbone (wired network connection), specifically, to exchange their own station information, thereby generating the neighboring cell information as the office data.

In the cellular mobile radio communication system SYS illustrated in Fig. 3C, a neighboring base station D is under the control of another radio network controller B. From the base station A, the neighboring base station D is under the control of the radio network controller B which is different from the radio network controller A under which the base station A is controlled. For collecting the neighboring cell information of the base stations A and B, the measurement radio wave is also required to be transmitted from the base station D.

In Figs. 3C and 3D, the radio network controller A, which has received the start trigger for the process of autonomously generating the neighboring cell information, also instructs the base station D to emit the measurement radio wave for the purpose of generating the neighboring cell information of the base stations A and B under its control. However, because the radio network controller A cannot directly communicate with the base station D, the radio network controller A is required to transmit an instruction message via the radio network controller B.

At thi's time, if there is no competition with the timing of generating the neighboring cell information for the base station under control of the radio network controller B, the radio network controller B transfers the message of instructing the transmission of the measurement radio signal from the radio network controller A to the base station D. However, if there is a competition with the timing of the radio wave transmission of generating the neighboring cell information for the base station under control of the radio network controller B or the like, the radio network controller B transmits a message indicating that the implementation of transfer is impossible to the radio network controller A as a replay. In this case, the radio network controller A retransmits the instruction message at another timing.

For the exchange of the self-station information after the completion of the measurement of the radio wave, the base stations A and B request the base station D under the control of the radio network controller B to make a notification of each self-station information by using the transfer function of the radio network controller B in the same manner.

### [Third exemplary operation]

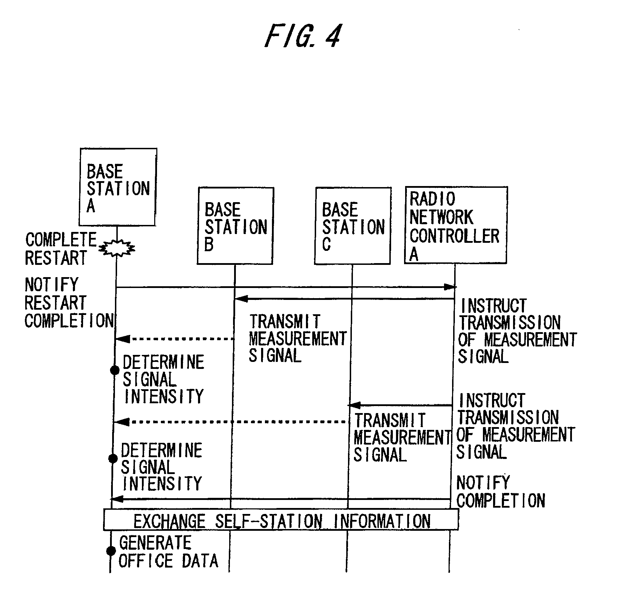

For example, in the cellular mobile radio communication system SYS illustrated in Fig. 3A above, the generation of the neighboring cell information can be started upon restart of the base station by the following method. Fig. 4 illustrates a sequence thereof.

It is assumed that the timing of causing each of the base stations A to C to autonomously generate the neighboring cell information is set immediately after the restart of one base station such as the reactivation of the base station by the maintenance person for the recovery from trouble. For example, upon completion of the restart of the base station A, the base station A notifies the radio network controller A of the completion of the restart by means of a message. Thereafter, the other base stations B and C sequentially emit the measurement radio signal through the radio channel for radio field intensity measurement in the order of instructions made by the radio network controller A. As a result, the base station A determines the neighboring cell to generate the neighboring cell information as the office data.

### [Fourth exemplary operation]

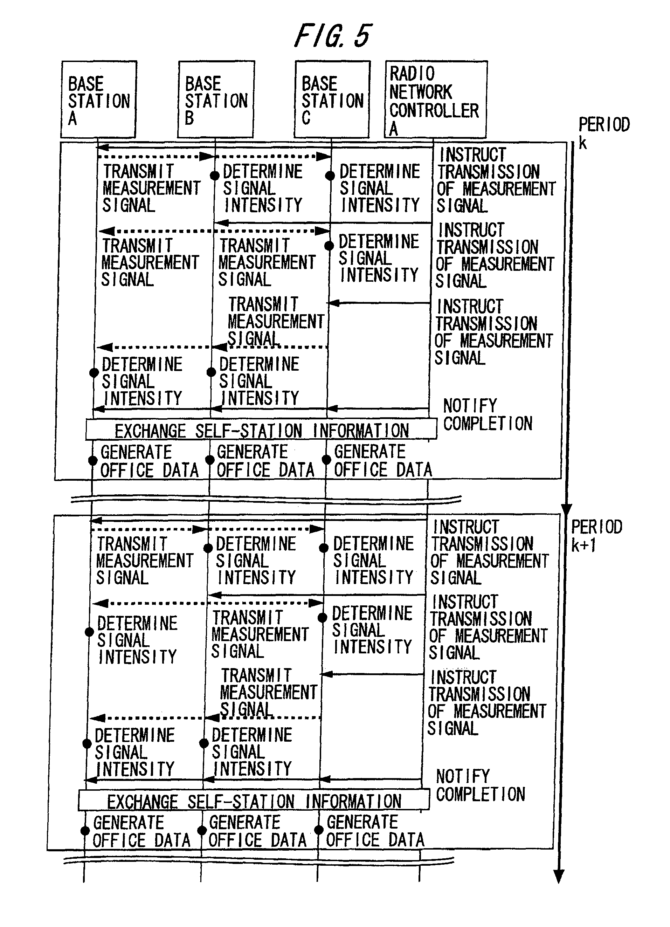

For example, in the cellular mobile radio communication system SYS illustrated in Fig. 3A above, the neighboring cell information is periodically generated to dynamically update the neighboring cell information by the following method. Fig. 5 illustrates a sequence thereof.

The base stations A, B and C constituting the cellular mobile radio communication system SYS periodically and autonomously generate the neighboring cell information based on the instruction (the reception of the instruction message) from the radio network controller A. In this case, the period is set to a long period of time such as one day. The periodic timing is managed by a timer (clock) in the radio network controller A. At the time set as the timing, the radio network controller A instructs the base stations A to C under its control to sequentially transmit the measurement radio wave. Since the update of the office data involves the restart of the base station, it is preferred to regulate the period to update the neighboring cell information at night.

### [Fifth exemplary operation]

In the cellular mobile radio communication system SYS, the maintenance person (operator) can designate a time at which the operation of generating the neighboring cell information is started.

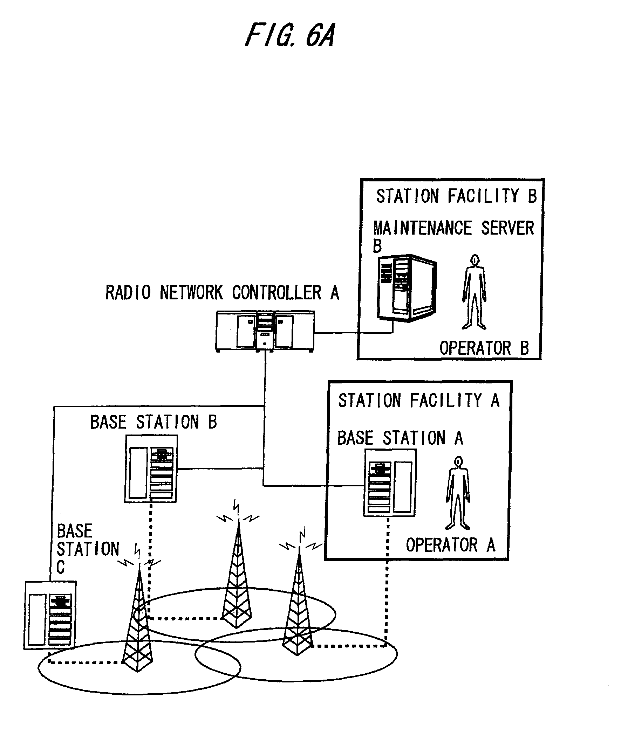

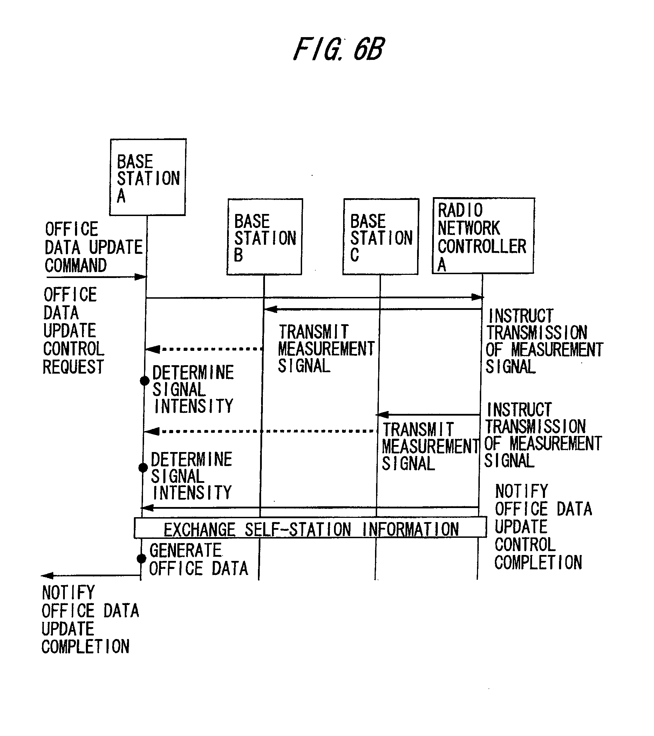

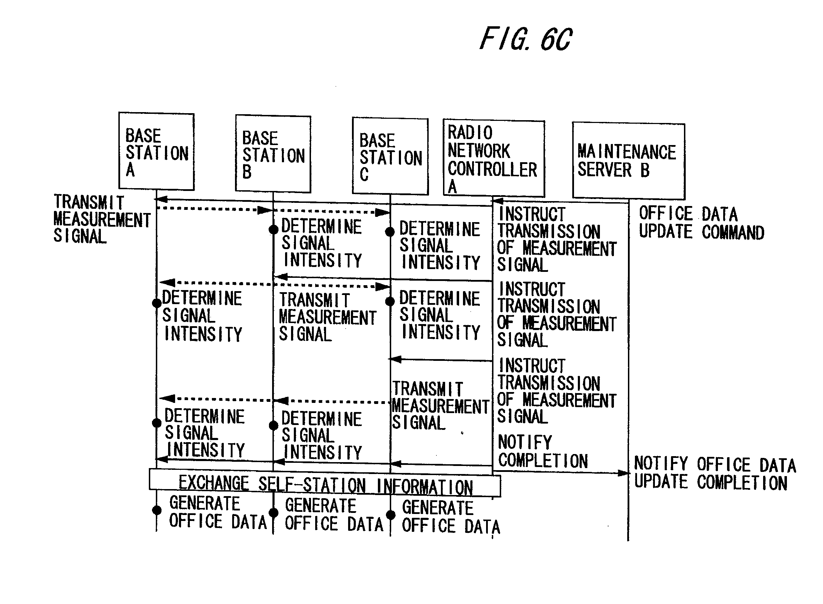

Fig. 6A illustrates a configuration of the cellular mobile radio communication system SYS in the fifth exemplary operation. Figs. 6B and 6C illustrate a sequence of message exchange in the system configuration illustrated in Fig. 6A. In this cellular mobile radio communication system SYS, the operator can give the instruction of updating the office data of the base station by any of the following two methods.

According to the first method, an operator A goes to a location (station facility A) where the base station A is installed to directly operate the base station A. As illustrated in Figs. 6A and 6B, in the station facility A, the operator A issues a office data update command to the base station A. The base station A transmits a office data update control request message to the radio network controller A at the upper level.

The radio network controller A, which has received the message, activates a sequence of generating the neighboring cell information for the other base stations B and C under its control. After the completion of the transmission of the measurement radio wave from all the base stations B and C under the control of the radio network controller A, the radio network controller A transmits a message for making a notification of the completion of the office data update control to the base station A. Then, the base station A performs a process of updating the neighboring cell information. Upon completion of the update of the office data, the base station A notifies the operator A of the completion of the update of the office data.

According to the secondmethod, a maintenance server, which manages the cellular mobile radio communication system SYS, makes the instruction. As illustrated in Fig. 6A and 6C, an operator B transmits the office data update command to the radio network controller A via a maintenance server B provided in a station facility B. The radio network controller A, which has received the command, activates a sequence of updating the neighboring cell information for the base stations A, Band C under its control. Upon completion of the transmission of the measurement radio wave by all the base stations A to C under the control of the radio network controller A, the radio network controller A transmits the message for making a notification of the completion of the office data update to the management server B.

### [Sixth exemplary operation]

In the cellular mobile radio communication system SYS, the neighboring cell information customized by the maintenance person is protected.

The maintenance person of the base station A illustrated in Fig. 7A can modify the office data A for the neighboring cell information by a maintenance operation. For the information for managing the list of the neighboring cells for its own cell in the neighboring cell information of the office data A, an update unallowance flag (ON/OFF) indicating the allowance/unallowance of a modification by autonomous control is provided for each of the neighboring cells, as illustrated in Fig. 7B.

An initial value of the update unallowance flag is "OFF". The maintenance person can arbitrary set ON/OFF at the time of update of the office data A. When the neighboring cell information is autonomously updated, the base station A does not delete the neighboring cell information of the neighboring cell having the update unallowance flag "ON" even if the electric power (radio field intensity) is lowered below the level necessary for the determination as the neighboring cell due to a change in the radio wave environment.

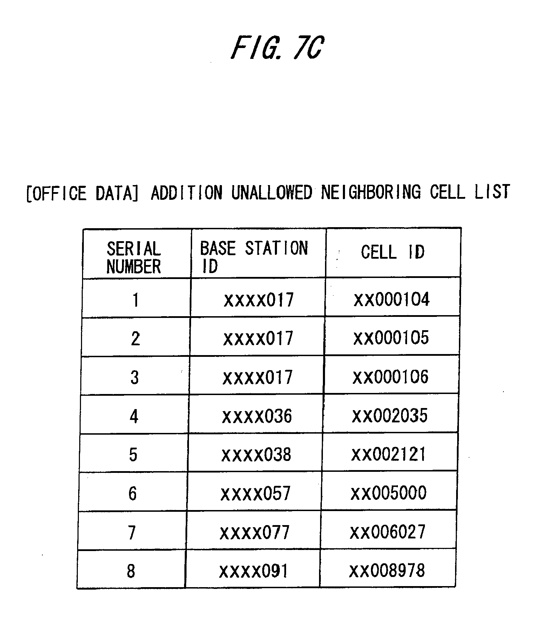

Moreover, as illustrated in Fig. 7C, an addition unallowed neighboring cell list corresponding to a list of cells which are not allowed to be added as neighboring cells is set as the office data A. Even if the base station A determines that the cell can be added as a new neighboring cell as a result of the measurement of the radio field intensity, the base station A does not add the cell registered in the addition unallowed neighboring cell list as the neighboring cell.

### [Seventh exemplary operation]

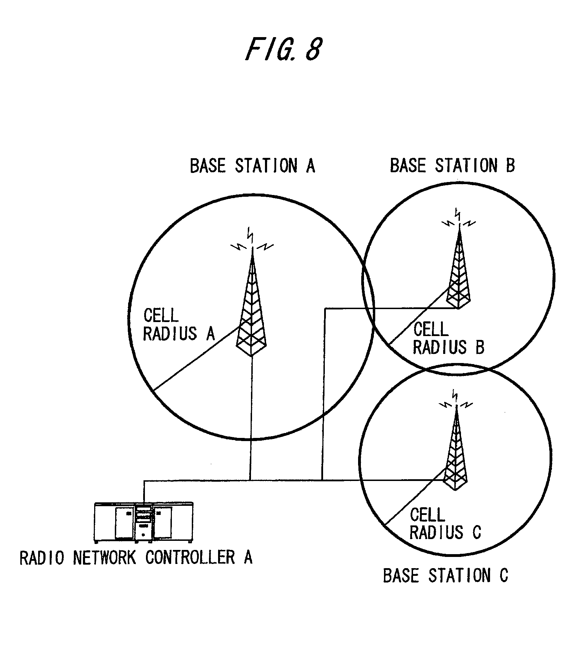

In the cellular mobile radio communication system SYS illustrated in Fig. 8, auxiliary data for generating the neighboring cell information can be generated by using GPS geographic information.

At the construction, latitude/longitude information of each of the base stations A, B and C is measured by a known method using the GPS. For each of the base stations A, B and C, the obtained latitude/longitude information is registered as location information in its own office data. The radio network controller A holds the latitude/longitude information of each of the base stations A to C under its control as its own office data, for each station. Furthermore, the radio network controller A holds cell radii A to C of the respective base stations A to C for each station.

Before autonomously generating the neighboring cell information, the radio network controller A notifies the base stations A to C under its control of the list of base stations corresponding to the neighboring cell candidates which are situated geographically close. The radio network controller A determines based on a distance between the base stations whether or not the base stations B and C are neighboring cell candidates for the base station A.

When a value obtained by adding the sum of the cell radius A of the base station A and the cell radius B of the base station B to a margin value b is larger than a geographic distance between the base stations A and B, the base station B is determined as the neighboring cell candidate for the base station A. When a geographic distance between the base station A and C is larger than a value obtained by adding the sum of the cell radii A and C to the margin value b, the base station C is determined as not being the neighboring cell candidate.

The radio network controller A notifies the base station A of the list of the neighboring cell candidates before the implementation of the neighboring cell information autonomous generation process. The list of the candidate cells is used to measure the radio field intensity of the neighboring cell candidates to generate the neighboring cell information. The radio network controller A manages the margin value b as a system parameter.

### [Eighth exemplary operation]

In the cellular mobile radio communication system SYS, the base station that is not geographically the neighboring cell can be excluded from the neighboring cell information by using the GPS geographic information.

When the function of determining the neighboring cell candidate in the seventh exemplary operation described above is not used, even the cell, which is not geographically the neighboring cell, is sometimes determined as the neighboring cell in terms of the radio wave environment as a result of the measurement of radio field intensity. For example, when a mobile phone terminal is used at a cape, the base station at a cape on the opposite shore captures the radio wave to erroneously determine the cell in which the mobile phone terminal is resident as the neighboring cell. In this case, because the cell is far in terms of distance and its geographic condition does not allow the base station at the cape on the opposite shore to be a handover target, the cell should not be determined as the neighboring cell.

After the update of the neighboring cell information of the office data, the base station calculates a geographic distance of the neighboring cell. Under the same condition as that in the seventh exemplary operation described above, the base station that is situated too far to be determined as the neighboring cell is deleted from the neighboring cell information. Alternatively, the base station may be registered in the addition unallowed neighboring cell list (see Fig. 7C) as the office data.

### [First variation of the system configuration]

A cellular mobile radio communication system SYS1 in another embodiment includes a plurality of base stations (base station devices). The cellular mobile radio communication system SYS1 does not include radio network controllers (RNC) serving as the plurality of radio network controllers included in the cellular mobile radio communication system SYS in the embodiment described above, as individually provided elements. In the cellular mobile radio communication system SYS1, each base station has an RNC function (for example, a handover control function or the like) to provide a plurality of mobile terminals under its control with a mobile communication service by the cooperation with the upper-level device.

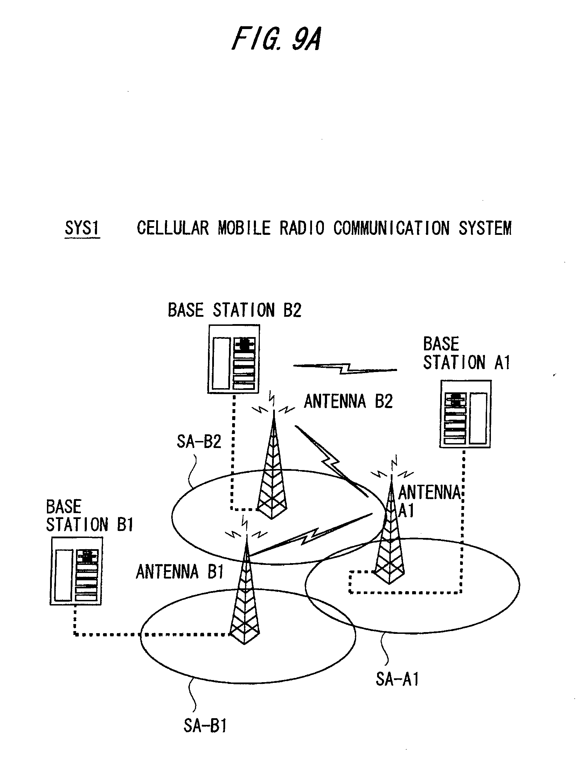

Referring to Fig. 9A illustrating an example of the system configuration, the cellular mobile radio communication system SYS1 includes a plurality of base stations A1, B1 and B2 adjacent to or close to each other and antennas A1, B1 and B2 respectively connected to the base stations A1, B1 and B2. For convenience of the description, only three base stations are illustrated herein. Office data respectively corresponding to the base stations A1, B1 and B2 are stored in the respective storage devices included in the base stations A1, B1 and B2. Each of the office data is data of the neighboring cell information of each base station.

The base station A1 and the antenna A1 constitute a cell covering a first area (service area) SA-A1 for providing the mobile terminal with the mobile communication service. The base station B1 and the antenna B1 and the base station B2 and the antenna B2 respectively constitute cells covering a second service area SA-B1 and a third service area SA-B2 for providing the mobile terminal with the mobile communication service.

In the cellular mobile radio communication system SYS1, in order to enable the autonomous generation of the office data for the neighboring cell information of each base station without using a human operation as much as possible, each base station has the above-mentioned functions (1) to (5) and (7) to (9) as in the case of the mobile radio communication system SYS according to the embodiment descried above and further has the following functions (10), (11) and (12).
(10) The function of determining the timing of measuring the radio field intensity by the negotiation between the base stations to start the measurement of the radio field intensity for generating the neighboring cell information.
(11) For the determination of the timing, the function of allowing each base station to determine the timing of measurement by the communication between the base stations using the radio channel.
(12) The function of allowing each base station to determine the timing of measurement by the communication between the base stations using the transmission channel (wired channel) via the backbone (core network).

### [Exemplary operation in the first variation of the system configuration (ninth exemplary operation)]

Next, various exemplary operations in the cellular mobile radio communication system SYS1 having the configuration illustrated in Fig. 9A will be described. Each process in the first variation of the configuration can be carried out in combination of a plurality of arbitrarily selected ones of the above-described processes.

In this cellular mobile radio communication system SYS1, the timing of measuring the radio field intensity can be determined by the negotiation between the base stations to start the measurement of the radio field intensity for generating the neighboring cell information by the following method. Then, the base stations mutually measure the radio field intensity to determine the neighboring cell based on the measured radio field intensity.

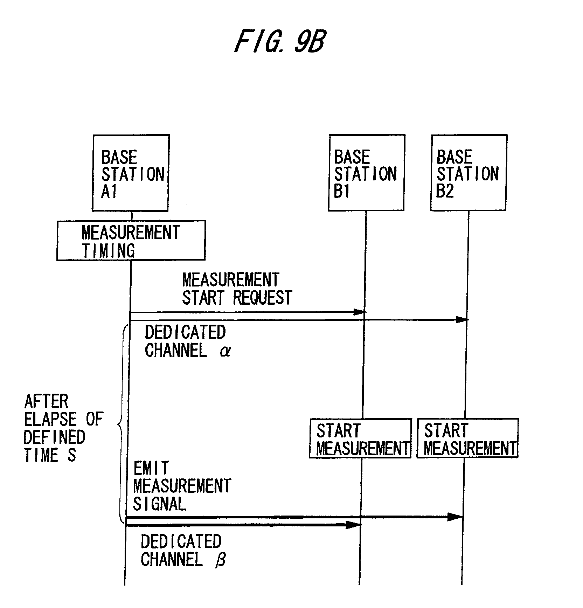

First, referring to Fig. 9B illustrating an example of the sequence of the negotiation between the base stations, the base station A1, which is going to start the measurement of the radio field intensity as a result of the installation of the base station itself, transmits a measurement start request message to a channel α dedicated to the communication between the base stations at a random time (arbitrary measurement timing determined by the base station itself). The transmission of the request message is controlled in a procedure defined not by a Layer 3 protocol but by a Layer 2 protocol. Each channel α dedicated to the communication between the base stations is shared by all the base stations in the cellular mobile radio communication system SYS1.

Each base station places the channel α dedicated to the communication between the base stations into the reception state except for a time period in which the request message is transmitted. Therefore, each base station can receive the request message from another base station. The request message contains the identification information (base station ID) of the base station corresponding to a transmission source. Therefore, the base station receiving the request message can identify the base station that has transmitted the request message.

The other base stations B1 and B2, which have received the request message from the base station A1, receive the measurement radio wave (measurement radio signal) through a measurement radio channel β to be able to measure the radio field intensity (to be in a measurement start state).

The base station A1, which has transmitted the request message, emits (transmits) the measurement radio wave through the radio field intensity measurement radio channel β after elapse of a predetermined time (defined time) S unless a negative message is returned from the other base stations B1 and B2.

Thereafter, the base stations mutually measure the radio wave intensity to determine based on the measured radio field intensity that the base station is the neighboring cell, as in the first exemplary operation described above.

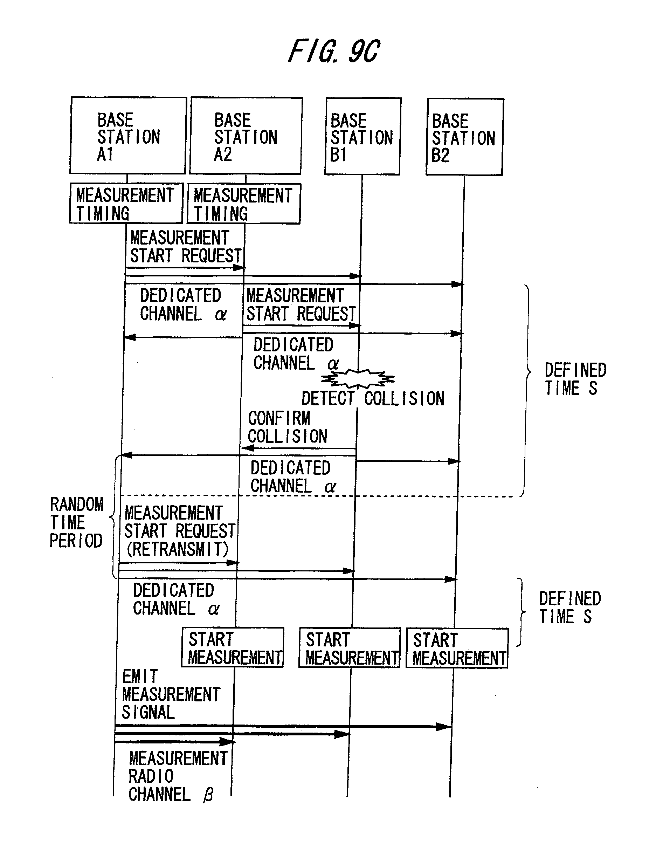

Next, referring to Fig. 9C illustrating another example of the sequence of the negotiation between the base stations, each of two base stations A1 and A2 (the base station A2 not illustrated in Fig. 9A), which are going to start measuring the radio field intensity as a result of the installation of the base station itself, transmits the measurement start request message at substantially the same time determined by each station through the channel α dedicated to the communication between the base stations. In this example, however, the measurement start request messages respectively transmitted by the base stations A1 and A2 collide against each other in the dedicated channel α for the other base stations B1 and B2.

If the collision between the request messages occurs as described above, the base stations B1 and B2 cannot read the base station ID corresponding to the parameter in the request message due to a radio interference. As a result, the base stations B1 and B2 determine the occurrence of the collision between the request messages.

Each of the base stations B1 and B2, which has detected the collision,transmitsa collision confirmation message within the defined time "S" by using the dedicated channel α. In Fig. 9C, the illustration of the collision confirmation message transmitted from the base station B2 is omitted. The collision confirmation message is, for example, NULL data.

After the confirmation of the collision confirmation message, each of the base stations A1 and A2 determines that the measurement start request message from its own station collides against the one from another base station. Each of the base stations A1 and A2, which has confirmed the occurrence of the collision, re-transmits the request message after another elapse of a random time from the defined time "S".

As a result, the base station A1, which has transmitted the request message, emits the measurement radio wave through the radio field intensity radio channel β after elapse of the defined time "S" unless a negative message is returned from the other base stations B1 and B2.

Returning to Fig. 9A, in each example of the sequence of the negotiation between the base stations described above, the radio channel α can be used as the channel α dedicated to the communication between the base stations to determine the timing of measuring the radio field intensity. In this case, each of the base stations uses the radio channel α assigned for this special purpose to transmit and receive a signal such as the measurement start request message and the collision confirmation message.

The radio channel α is a physical channel for both uplink and downlink (transmission and reception). Therefore, for some duplex systems to be employed, a special attention such as the preparation of a slot for both uplink and downlink is needed.

The radio channel α for the negotiation between the base stations uses the maximum electric power of the base station A1 to transmit the signal, thereby allowing the measurement start request message to be received by the farthest possible base station. Specifically, the negotiation is carried out for the base stations B1 and B2 that are present within the reach of the measurement start request message from the base station A1.

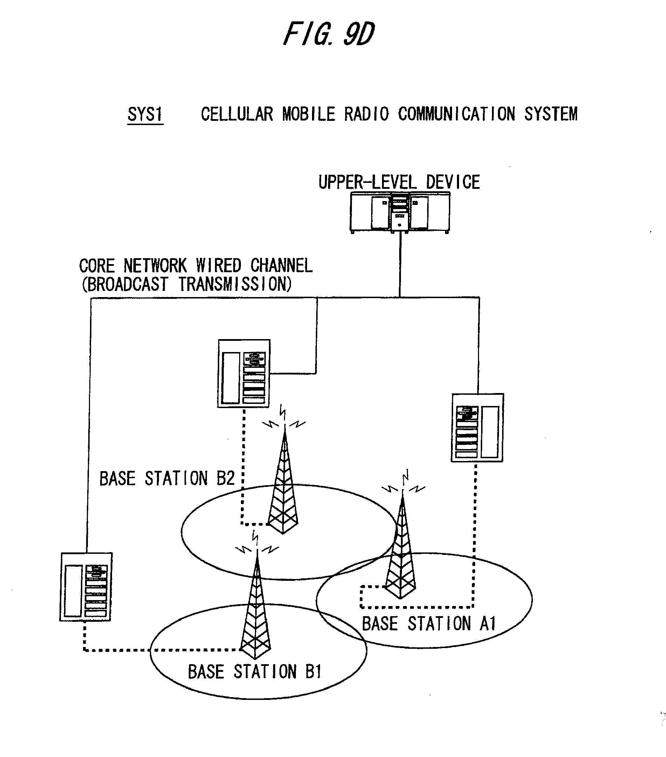

Moreover, as illustrated in Fig. 9D, in each of the examples of the sequence of the negotiation between the base stations described above, the wired channel α of a core network (for example, an internet protocol (IP) network or an asynchronous transfer mode (ATM) network) can be used as the channel α dedicated to the communication between the base stations to determine the timing of measuring the radio field intensity. In this case, each of the base stations uses the radio channel α assigned for this special purpose to transmit and receive a signal such as the measurement start request message and the collision confirmation message.

In contrast to the case where the radio channel α is used, when the wired channel α is used as the channel α dedicated to the communication between the base stations, the measurement start request messages transmitted from the base stations A1 andA2 do not cause a radio interference. The other base stations B1 and B2 determine the occurrence of a collision upon reception of the measurement start request messages from both of the base stations A1 and A2 within a predetermined time.

When the wired channel α via the backbone is used in the negotiation between the base stations, an interface similar to that in the communication between the base stations is used to enable the handover of the mobile terminal between the base stations. However, because it is necessary to transmit the message without designating a target base station, a broadcast communication to a plurality of the other base stations is used. If a relay by another node (upper-level device such as a gateway device) is required for the communication between the base stations, the node is provided with a message transfer function.

If the range covering the base stations, in which the broadcast transmission of the measurement start request message is performed, is too large, a probability of the collision between the request messages becomes higher. If the range is too small, data close to the neighboring cell information, which is to be generated by this technique as a final result to determine the range of transmission of the request message to be broadcasted, is required from the beginning. Therefore, an appropriate range is pre-defined by a system parameter.

For defining the parameter, the following two methods are conceivable. In the case of the mobile radio communication system including the upper-level device for the base station, the range is determined to include the base stations under the control of (belonging to) the upper-level device. If the mobile radio communication system does not include any upper-level device, the location information (latitude/longitude), which is obtained by measuring each base station at the time of construction and is managed by the system operation company (maintenance person), is used to establish a list of the base stations which are geographically close to the base station which generates the neighboring cell information. The range covering the list of the base stations is determined as the neighboring cell measurement range. Herein, the upper-level device is a gateway device or various servers in the core network or the like.

### [Second variation of the system configuration]

A cellular mobile radio communication system SYS2 in a further embodiment includes a plurality of base stations (base station devices). The cellular mobile radio communication system SYS2 does not include the radio network controllers (RNC) serving as the plurality of radio network controllers included in the cellular mobile radio communication system SYS in the embodiment described above as the individually provided elements. In the cellular mobile radio communication system SYS2, each base station has the RNC function. By the cooperation with the upper-level device, the base station provides a plurality of mobile terminals under its control with the mobile communication service.

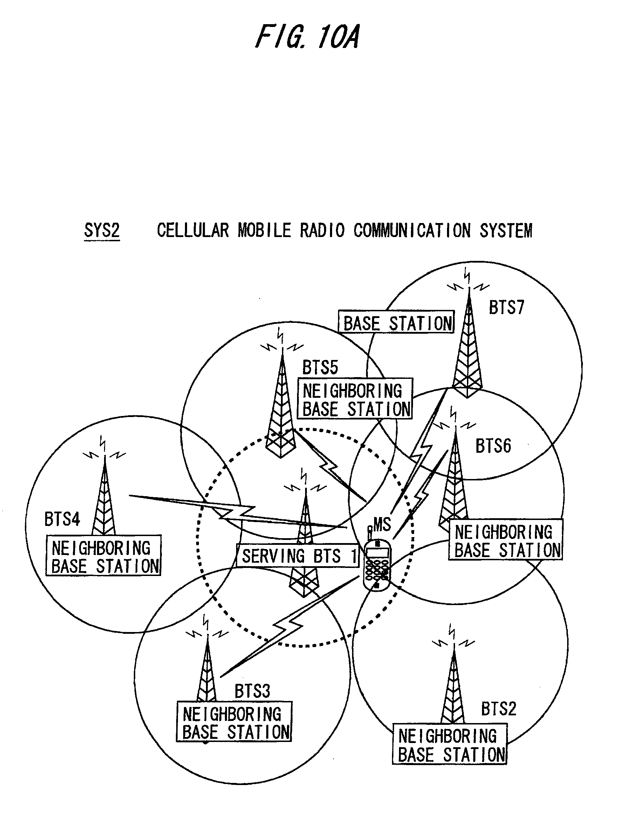

Referring to Fig. 10A illustrating an example of the system configuration, the cellular mobile radio communication system SYS2 includes a plurality of base stations BTS1 to BTS7 adjacent or close to each other and antennas respectively connected to the base stations BTS1 to BTS7. Herein, the base station BTS1 is a serving base station in a cell of which a mobile terminal MS is resident. The base stations BTS2 to BTS6 are neighboring base stations for the base station BTS1. The base station BTS7 is not a neighboring base station for the base station BTS1.

Each of the base stations and each of the antennas constitute the cell covering each area (service area) for providing the mobile terminal with the mobile communication service. Office data respectively corresponding to the base stations BTS1 to BTS7 are stored in storage devices respectively included in the base stations BTS1 to BTS7. Each office data is data of the neighboring cell information of each base station.

In the cellular mobile radio communication system SYS2, each base station has at least one of the above-mentioned functions (1) to (5) and (7) to (9) to autonomously generate the office data for the neighboring cell information of each base data without using the human operation as much as possible, as in the case of the mobile radio communication system SYS according to the embodiment described above. In addition, each of the base stations and the mobile terminals has the following functions (13) and (14).
(13) For example, the function of allowing the mobile terminal MS resident in the cell of the base station BTS1 to measure the radio field intensity of the measurement radio wave (measurement radio signal) from the base stations BTS2 to BTS7 to generate neighboring cell list information for the base station BTS1 and to notify the base station BTS1 of the generated list.
   In this case, the mobile terminal MS measures the radio field intensity and makes a notification of the neighboring cell list information while setting a control channel or being stand-by (idling). The mobile terminal MS is a mobile terminal having a special function or a mobile terminal used by a general user.
(14) The function of allowing the base station BTS1, which is notified of the neighboring cell list information by the mobile terminal MS, to generate the neighboring cell information as the office data based on the notified information.

### [Exemplary operation in the second variation of the system configuration (tenth exemplary operation)]

Next, various exemplary operations in the cellular mobile radio communication system SYS2 having the configuration illustrated in Fig. 10A will be described. Each process in the second variation of the configuration described below can be carried out in combination of a plurality of arbitrary ones selected from the above-described processes.

In the cellular mobile radio communication system SYS2, the mobile terminal MS resident in the cell of the base station BTS1 measures the radio field intensity of the measurement radio wave from each of the base stations BTS2 to BTS7 to generate the neighboring cell list information for the base station BTS1 based on the result of measurement and to notify the base station BTS1 of the generated information by the following method.

Referring to Figs. 10A to 10E collectively, the base station BTS1, which is required to generate the neighboring cell information as a result of the new installation of the base station itself, uses the mobile terminal MS resident in the cell under its control as a tool.

Themobile terminal MS receives the measurement radiowaves transmitted from the base stations BTS2 to BTS7 at certain timing to automatically measure the radio field intensities by a known technique. The radio channel for measuring the radio field intensity is the same as that in the mobile radio communication system SYS in the above-mentioned embodiment. Specifically, the radio channel for measuring the radio field intensity is predetermined according to the above- mentioned radio transmission method. The measurement radio wave contains each base station ID.

The mobile terminal MS manages the base stations, each having the radio field intensity equal to or higher than a defined value "P", as list data. The defined value "P" is determined in consideration of the minimum electric power that enables the diversity of the mobile terminal MS between the cells and is stored as a system parameter of the mobile terminal MS. At a geographic location where the mobile terminal MS measures the radio field intensity, the base station having the radio field intensity equal to or higher than the defined value "P" means that movement to another cell or diversity handover is possible. The base station having the radio field intensity equal to or higher than the defined value "P" is the neighboring cell for the cell in which the mobile terminal MS is resident.

The mobile terminal MS notifies the serving base station BTS1, which manages call processing of the mobile terminal MS at that time, of list information of a neighboring cell group (neighboring cell list information). Since the list of the neighboring cells, which can be generated by the mobile terminal MS, differs depending on the geographic location of the mobile terminal MS in the cell, a difference in the neighboring cells determined depending on the location of the mobile terminal in the cell according to the movement of the terminal is also detected by periodical measurements. Therefore, the mobile terminal MS holds a total number of the neighboring cells that have been successfully detected by the measurement as a list.

The mobile terminal MS measures the radio field intensity of the neighboring base station again after the registration of the location and notifies the serving base station of the list information of the neighboring cell group when the base station (serving cell) under which the mobile terminal MS is controlled is changed due to the movement to another cell.

The serving base station BTS1 notified of the neighboring cell list information by the mobile terminal MS determines (selects) the neighboring cell based on the base station ID contained in the neighboring cell list information. Thereafter, the base station BTS1 requests, from the base stations BTS2 to BTS6 certified as the neighboring cells, their own location (latitude/longitude) information, capacity information and the like to reflect a response in a neighboring cell management table included in a database in the base station BTS1.

Herein, the base station BTS1 is notified of the neighboring cell list information from the plurality of mobile terminals MS. When the base station BTS1 is notified of the neighboring cell list information from the plurality of mobile terminals MS within a certain period of time, the base station BTS1 determines a list of the neighboring cells by any of the following algorithms AL1 and AL2.
AL1: all the cells contained in the notifications from the plurality of mobile terminals
AL2: cells contained in a certain number or more of the notifications

Each time the mobile terminal MS under the control of the base station BTS1 moves, the base station BTS1 is notified of the neighboring cell list information. Since the rewrite of the neighboring cell information for each reception of the notification is a needless process, the base station BTS1 accumulates the received neighboring cell list information by a predetermined time and updates the neighboring cell information at periodic timing. Alternatively, the base station BTS1 modifies the neighboring cell information as the office data each time the determination of the neighboring cells is changed by the above-mentioned algorithm.

In the above-mentioned process, the mobile terminal MS measures the radio field intensity and makes a notification of the neighboring cell list information while setting the control channel or being on stand-by (idling).

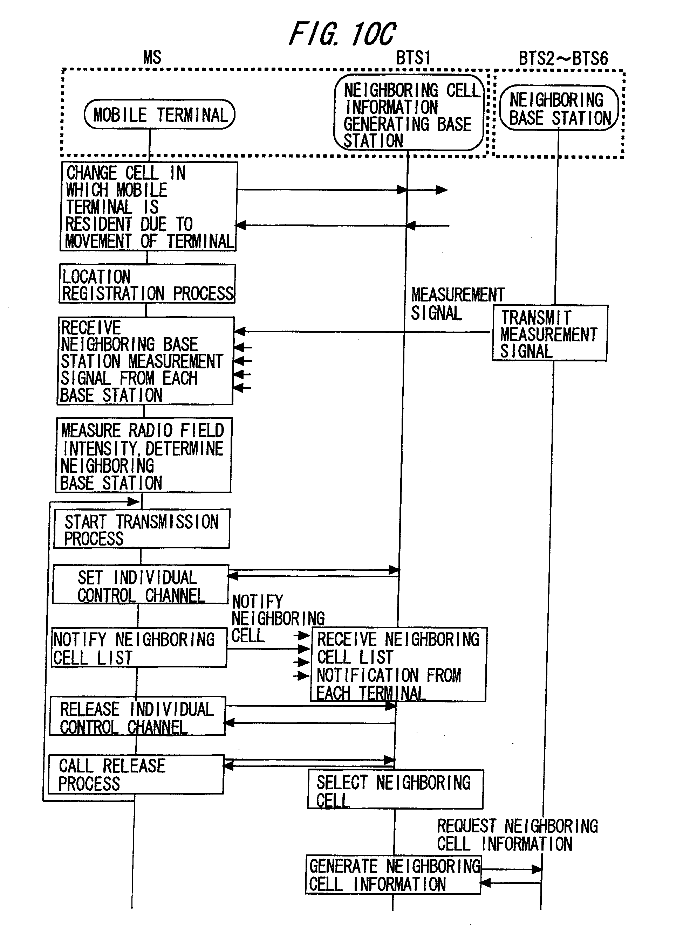

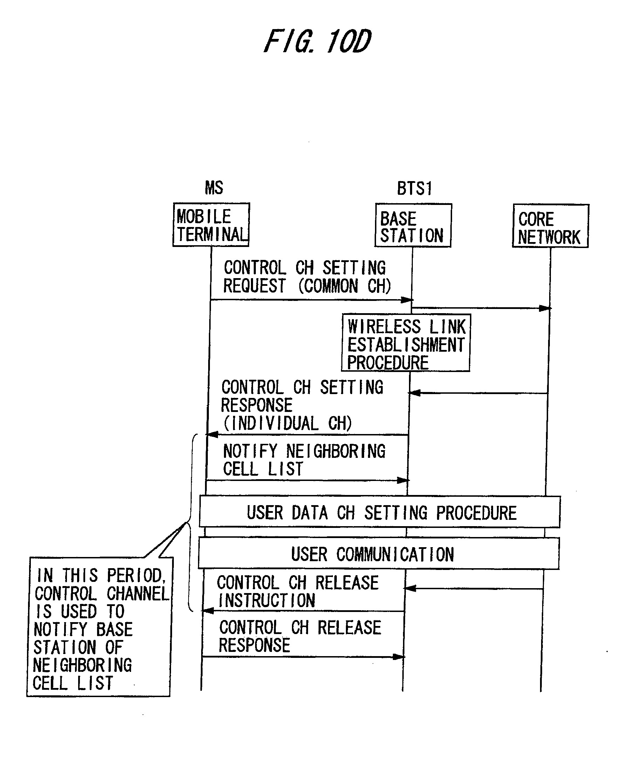

As illustrated in sequences of Figs. 10C and 10D, the mobile terminal MS notifies the base station BTS1 of the neighboring cell list information when the mobile terminal MS carries out a transmission (calling) procedure or a reception (called) procedure for starting the communication.

The radio channel for notifying the base station BTS1 of the neighboring cell list information uses an individual channel corresponding to a control channel between the mobile terminal MS and the base station BTS1. Therefore, the mobile terminal MS uses the individual channel to make the notification of the neighboring cell list information after setting the individual channel in the calling procedure. In this case, since the notification is made when the call is set, the base station BTS1 is not notified of the neighboring cell list information unless the mobile terminal MS sets the call while being resident in a certain cell. Since the notification of the neighboring cell list information to the base station BTS1 does not affect the call setting sequence, the notification can be executed in parallel with the call setting sequence after the control (individual) channel is set.

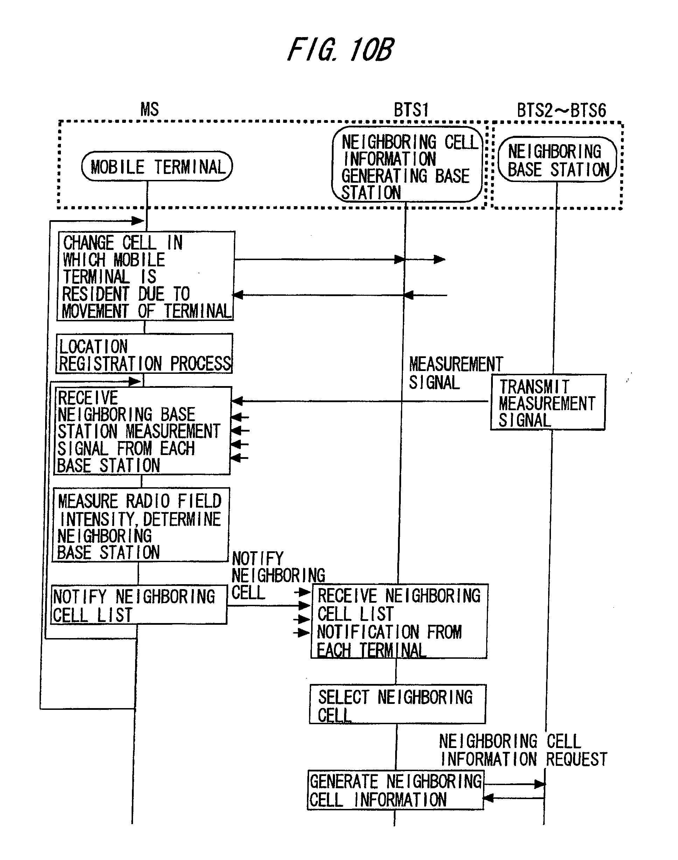

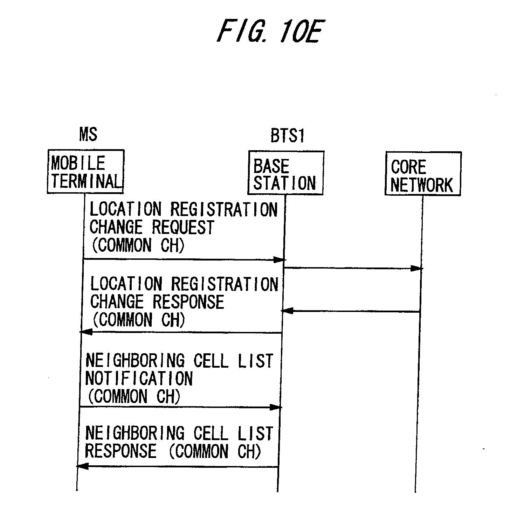

Moreover, as illustrated in the sequences of Figs. 10B and 10E, after the serving cell setting (location registration) is performed after power-on of the mobile terminal MS or after the completion of a modification of the location registration of the cell due to a change of the serving cell after the movement of the mobile terminal MS, the mobile terminal MS starts a process of making a notification of the neighboring cell list information.

Then, after the mobile terminal MS creates a list of the neighboring cells, the mobile terminal MS notifies the base station BTS1 in the serving cell, of the neighboring cell list information. For a message notification, a shared channel corresponding to the control channel in the Layer 2 protocol is used. The shared channel is used because the individual channel is not established between the mobile terminal MS and the base station BTS1.

Since the base station BTS1 can be notified of the neighboring cell list information at any time in the idling state after the location registration, the mobile terminal MS transmits a neighboring cell list notification message after the completion of the measurement of the base station electric power (measurement radio field intensity) by the mobile terminal MS.

Herein, the mobile terminal MS is a mobile terminal having a special function (special terminal) or a mobile terminal used by a general user (general terminal).

When the mobile terminal MS is the special terminal used by the system operation company (maintenance person), it is a single or a small number of specific terminal(s) that notify the base station BTS1 of the neighboring cell list information. For this reason, the base station BTS1 uses the neighboring cell list information received from the specific terminal as information for generating the neighboring cell information without fail.

When the base station is constructed to expand the area or to improve the quality, the maintenance person goes around the corresponding base station with the special terminal after the installation of the base station to cause the base station to construct the neighboring cell information.

On the other hand, the mobile terminal MS is the general terminal used by the general user, the base station BTS1 is notified of the neighboring cell list information by a large number of unspecific terminals at unspecific timing. The base station BTS1 regularly updates the neighboring cell information to enable the update of the neighboring cell information following a change in the radio wave environment in real time during the operation of the mobile radio communication system.

According to the second variation described above, the base station BTS1 uses the mobile terminal MS as a tool to allow the neighboring cell information to be more accurately generated.

### [Third variation of the system (Eleventh exemplary operation)

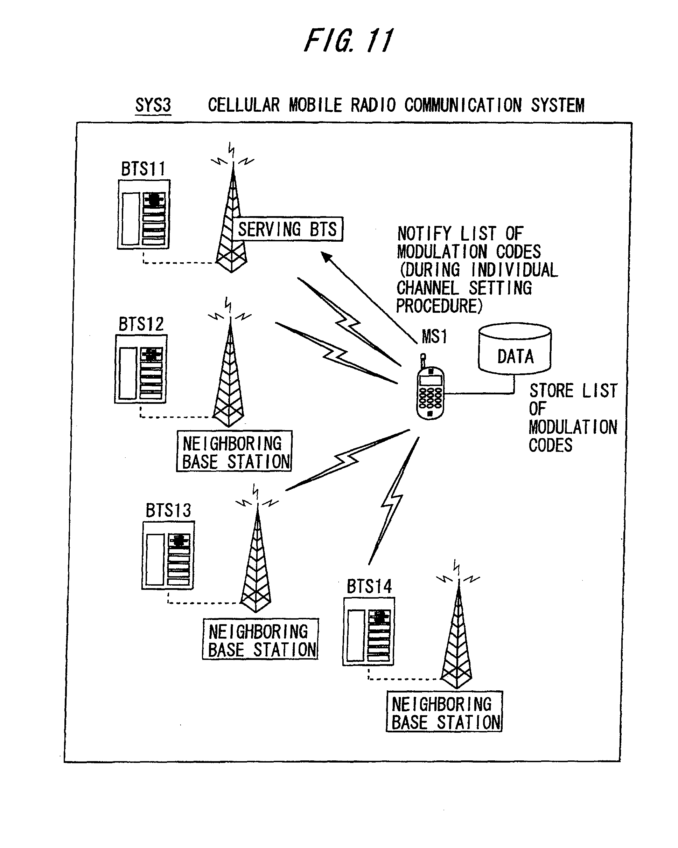

The cellular mobile radio communication system SYS2 in the above-mentioned further embodiment of the present invention can be further varied to be carried out as illustrated in Fig. 11.

A cellular mobile radio communication system SYS3 including a plurality of base stations BTS11 to BTS14 (each including an antenna) uses the function of a mobile terminal MS1 having existing specifications to generate the neighboring cell information.

In the cellular mobile radio communication system SYS3, the mobile terminal MS1 resident in the cell of the serving base station BTS11 receives a radio signal through a signaling channel from the other multiple base stations BTS12 to BTS14 to detect a modulation code. Then, the mobile terminal MS1 notifies the base station BTS11 of list information of the detected modulation codes while setting an individual channel.

The base station BTS11, which is notified of the list information of the modulation codes by the mobile terminal MS1, converts the list information of the modulation codes into IDs (identification information) of the base stations BTS12 to BTS14 to generate the neighboring cell information as the office data.

According to the existing W-CDMA specifications, the mobile terminal receives the radio signal through the signaling channel while idling from the base station, and notifies the serving base station of the detected CDMA modulation code of the base station during the procedure of setting the individual channel. The serving base station can inversely convert the list of the modulation codes notified by the mobile terminal into the base station IDs to obtain a list of the base station IDs.

The use of the above-mentioned function can be realized by adding a part of the functions in the mobile radio communication system SYS2 according to the further embodiment described above to the functions of the existing mobile terminal and base station.

However, the determination of the neighboring cell is based on whether or not the radio signal has been successfully detected through the signaling channel. Therefore, the neighboring cell list information obtained by the above function differs from that obtained as a result of the process in the mobile radio communication system SYS2 according to the further embodiment described above.

The functions added to the base station in the existing system are a database for managing the neighboring cell list information for each mobile terminal and a function of periodically generating the neighboring cell information based on the database.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A method of autonomously generating neighboring cell information in a cellular mobile radio communication system comprising at least a plurality of base station devices, each constituting a cell covering a service area for providing a mobile terminal with a mobile communication service, comprising:
transmitting, by a first base station device of the plurality of base station devices, a measurement radio signal through a radio channel for radio field intensity measurement;
measuring a radio field intensity of the measurement radio signal received from the first base station device;
determining based on the measured radio field intensity whether or not the first base station device is a neighboring cell;
registering identification information of the first base station device in second office data of neighboring cells possessed by itself when the first base station device is determined as the neighboring cell;
obtaining first office data possessed by the first base station device based on the identification information; and
reflecting the first office data obtained from the first base station device as neighboring cell information in the second office data possessed by itself, wherein the measuring, determining, registering, obtaining and reflecting being sequentially performed by each of a plurality of the other second base station devices.

2. The method of autonomously generating the neighboring cell information according to Claim 1, wherein the radio channel for the radio field intensity measurement is predetermined according to a radio transmission method.

3. The method of autonomously generating the neighboring cell information according to any preceding claim, further comprising recognizing, by each of the second base station devices, the first base station device based on the identification information contained in the measurement radio signal.

4. The method of autonomously generating the neighboring cell information according to any preceding claim, further comprising deleting, by each of the second base station devices, the neighboring cell information corresponding to the first base station device from the second office data when the first base station device is determined as not being the neighboring cell and the first base station device has been registered as the neighboring cell in the second office data currently possessed by itself.

5. The method of autonomously generating the neighboring cell information according to any preceding claim, wherein:
the cellular mobile radio communication system further comprises at least one radio network controller; and
the method further comprises instructing, by the radio network controller, the first base station device to transmit the measurement radio signal.

6. The method of autonomously generating the neighboring cell information according to any of claims 1 to 4 wherein:
the cellular mobile radio communication system further comprises at least one radio network controller; and
when a plurality of the radio network controllers are present, the method further comprises:
directly instructing, by a first radio network controller of the plurality of radio network controllers, the first base station device to transmit the measurement radio signal; and
transferring, by a second radio network controller of the plurality of radio network controllers, an instruction of transmitting the measurement radio signal from the first radio network controller to another first base station device under its control.

7. The method of autonomously generating the neighboring cell information according to any of claims 1 to 4 wherein:
the cellular mobile radio communication system further comprises at least one radio network controller,
the method further comprises instructing, by the radio network controller, the first base station device to transmit the measurement radio signal upon restart of one of the first base station devices.

8. The method of autonomously generating the neighboring cell information according to any of claims 1 to 4 wherein:
the cellular mobile radio communication system further comprises at least one radio network controller; and
the method further comprises periodically repeating, by the radio network controller, an instruction of transmitting the measurement radio signal to the first base station device to allow the neighboring cell information to be dynamically updated.

9. The method of autonomously generating the neighboring cell information according to any of claims 1 to 4 wherein:
the cellular mobile radio communication system further comprises at least one radio network controller; and
the method further comprises instructing, by the radio network controller, the first base station device to transmit the measurement radio signal according to an instruction from a maintenance person.

10. The method of autonomously generating the neighboring cell information according to any preceding claim, wherein the neighbouring cell information to be protected can be customized by a maintenance person.

11. The method of autonomously generating the neighboring cell information according to any preceding claim, further comprising using geographic information of a GPS (Global Positioning System) to generate auxiliary data for generating the neighboring cell information

12. The method of autonomously generating the neighboring cell information according to any preceding claim, further comprising using geographic information of a GPS (Global Positioning System) to exclude the neighboring cell information corresponding to the first base station device that is not geographically the neighboring cell from the second office data.

13. The method of autonomously generating the neighboring cell information according to any preceding claim, further comprising:
determining, by the first base station device, timing of measuring the radio field intensity by a negotiation with the second base station device through a channel dedicated to communication between the base station devices; and
starting, by the second base station device, measuring the radio field intensity for generating the neighboring cell information.

14. The method of autonomously generating the neighboring cell information according to Claim 13, wherein the channel dedicated to the communication between the base station devices is any of a radio channel and a wired channel.

15. A method of autonomously generating neighboring cell information in a cellular mobile radio communication system comprising at least a plurality of base station devices, each constitutinga cell covering a service area for providing a mobile terminal with a mobile communication service, comprising:
measuring, by a mobile terminal resident in a cell of a first base station device of the plurality of base station devices, measurement radio signals through a radio channel for radio field intensity measurement from a plurality of the other second base station devices to measure radio field intensities;
generating, by the mobile terminal, neighboring cell list information for the first base station device based on the result of measurement to notify the first base station device of the generated neighboring cell list information; and
generating, by the first base station device notified of the neighboring cell list information by the mobile terminal, neighboring cell information as office data based on identification information of the second base station devices contained in the neighboring cell list information.

16. The method of autonomously generating neighboring cell information according to Claim 15, wherein the mobile terminal measures the radio field intensity of the measurement radio signal while setting a control channel or idling.

17. A method of autonomously generating neighboring cell information in a cellular mobile radio communication system comprising at least a plurality of base station devices, each constituting a cell covering a service area for providing a mobile terminal with a mobile communication service, comprising:
receiving, by a mobile terminal resident in a cell of a first base station device of the plurality of base station devices, radio signals through a signaling channel from a plurality of the other second base station devices to detect modulation codes;
notifying, by the mobile terminal, the first base station device of list information of the detected modulation codes; and
converting, by the first base station device notified of the list information of the modulation codes by the mobile terminal, the list information of the modulation codes into identification information of the second base station devices to generate neighboring cell information as office data.
